# EUROPÄISCHE PATENTSCHRIFT

(11) **EP 3 357 116 B1**
(45) Veröffentlichungstag und Bekanntmachung des Hinweises auf die Patenterteilung: **30.10.2019**
(21) Anmeldenummer: 16770947.6
(22) Anmeldetag: 28.09.2016
(51) Int. Cl.: H01M 4/66, B23K 26/00, B23K 26/0622, H01M 10/0525

(54) **ELEKTRISCH LEITFÄHIGES BASISMATERIAL UND SCHICHTVERBUND, VERFAHREN ZUR IHRER HERSTELLUNG UND IHRE VERWENDUNG**
ELECTRICALLY CONDUCTIVE BASE MATERIAL AND LAYER COMPOSITE, METHOD FOR PRODUCING THE SAME, AND USE OF THE SAME
MATÉRIAU DE BASE ET COMPOSITE STRATIFIÉ ÉLECTROCONDUCTEURS, PROCÉDÉ POUR LEUR FABRICATION ET LEUR UTILISATION

(30) Priorität: 30.09.2015 DE 102015218907
(43) Veröffentlichungstag der Anmeldung: 08.08.2018
(73) Patentinhaber: Karlsruher Institut für Technologie, 76131 Karlsruhe (DE)
(72) Erfinder: PFLEGING, Wilhelm, 76351 Linkenheim (DE); PRÖLL, Johannes, 96052 Bamberg (DE); ZHENG, Yijing, 76344 Eggenstein (DE)
(74) Vertreter: Altmann Stößel Dick Patentanwälte PartG mbB
(86) Internationale Anmeldenummer: PCT/EP2016/073054
(87) Internationale Veröffentlichungsnummer: WO 2017/055323

(56) Entgegenhaltungen:
- JP-A- 2007 149 612
- US-A1- 2009 280 407
- ZUHLKE CRAIG A ET AL: "Fundamentals of layered nanoparticle covered pyramidal structures formed on nickel during femtosecond laser surface interactions", APPLIED SURFACE SCIENCE, Bd. 283, 9. Juli 2013 (2013-07-09), Seiten 648-653, XP028698367, ISSN: 0169-4332, DOI: 10.1016/J.APSUSC.2013.07.002

## Beschreibung

### Gebiet der Erfindung

Die Erfindung betrifft ein elektrisch leitfähiges Basismaterial, ein Verfahren zur seiner Herstellung und seine Verwendung als Stromableiter für ein elektrisch leitfähige Partikel aufweisendes Elektrodenmaterial. Die Erfindung betrifft weiterhin einen elektrisch leitfähigen Schichtverbund, welcher das Basismaterial umfasst, ein Verfahren zur seiner Herstellung und seine Verwendung in einem Sekundärelement eines Akkumulators, insbesondere in einer Lithium-Ionen-Batterie.

### Stand der Technik

Die Erfindung ist auf dem Gebiet der Sekundärelemente in Akkumulatoren, insbesondere in Lithium-Ionen-Batterien, angesiedelt. Die technische Entwicklung auf diesem Gebiet wird vor allem wird durch den steigenden Bedarf an leistungsfähigen Energiespeichern in Hybrid-, Plug-In- oder vollelektrischen Fahrzeugen oder als stationäre Energiespeicher innerhalb vernetzten Stromerzeugern, Verbrauchern und Verteilern angetrieben.

In den wiederaufladbaren Sekundärelementen der Akkumulatoren werden vor allem in Lithium-Ionen-Batterien häufig elektrisch leitfähige multiskalige Materialkomposite oder pulverförmige Elektroden, welche über elektrisch leitfähige Partikel, insbesondere Primärpartikel, Aggregate und/oder Agglomerate mit Abmessungen von 10 nm bis 100 µm, verfügen, als Elektroden eingesetzt. Bei der Beschichtung von Stromableitern, welche üblicherweise in Form von Stromableiterfolien vorliegen, mit einer Pastenmasse, welche Lösungsmittel, Leitfähigkeitsadditive, Polymerbinder und die elektrisch leitfähige Aktivpartikel umfassen kann, stellt sich die Aufgabe einer ausreichenden mechanischen und elektrischen Anbindung der aus der Pastenmasse erzeugten schichtförmigen Elektrode an den Stromableiter. Eine unzureichende Anbindung der schichtförmigen Elektrode an den Stromableiter kann zu teilweiser oder vollständiger Schichtdelamination vor und/oder nach einer elektrochemischen Beanspruchung des Sekundärelements führen, wodurch ein frühzeitiger Ausfall des Sekundärelements hervorgerufen werden kann. Eine möglichst gute Schichthaftung stellt daher einen Verfahrensschritt mit Einfluss auf die Elektrodenqualität, die Leistung des Akkumulators im Betrieb und auf mögliche Produktionsausfälle bei der Montage der Sekundärelemente dar.

Allerdings verfügen derzeit aus dem Stand der Technik bekannte Stromableiterfolien in der Regel über eine Dicke von 8 bis 18 µm und weisen auf beiden Seiten nahezu identische, homogene Oberflächen mit einer Rauigkeit Rz von 0,5 µm bis 2 µm auf, so dass sie nicht auf die Ankopplung an elektrisch leitfähige Aktivpartikel in Form von multiskaligen Materialkompositen ausgelegt sind. Weiterhin kann das Elektrodenmaterial, welches in Kontakt mit einer derartig homogenen Oberfläche steht, keinen besonders hohen Volumenänderungen ausgesetzt werden, ohne möglicherweise die Anbindung an den Stromableiter zu verlieren. Diese Eigenschaft ist sowohl für Lithium-Ionen-Batterien als auch für zukünftige hochkapazitive Sekundärelemente etwa auf der Basis von Silizium, Lithium-Schwefel oder Zinnoxid, bei denen aufgrund eines Kapazitätszuwachses mit Volumenänderungen von 400 % (zum Vergleich Graphit ca. 5 %) zu rechnen ist, insbesondere im Hinblick auf die Lebensdauer und Zyklenfestigkeit der damit ausgestatteten Akkumulatoren nachteilig.

Typische Folienmaterialien sind Aluminium und Kupfer. Die Aluminiumfolie wird hierbei üblicherweise als Stromableiter an der Kathode verwendet und typischerweise beidseitig mit LiNiₓMn_{y}Co_{z}O₂ (NMC), LiFePO₄ (LFP), LiCoO₂ (LCO) oder LiMn₂O₄ (LMO) beschichtet. Die Kupferfolie wird dagegen üblicherweise als Stromableiter an der Anode eingesetzt und typischerweise beidseitig mit Graphit beschichtet. In Lithium-Ionen-Batterien kommen derzeit vor allem zwei Arten von Kupferfolien zum Einsatz, einerseits gewalzte Folien (*roll-annealed (RA) copper foil*) und elektrolytisch abgeschiedene Folien (*electrodeposited (ED) copper foil*). Im Hinblick auf die Schichthaftung erweist sich hierbei insbesondere die Kupferfolie als nachteilig, da dort die Ausbildung einer Solid-Electrolyte Interphase, die chemische Degradation und die integralen Volumenänderungen, welche sich als Aufquellen des Schichtkomposits äußern können, besonders ausgeprägt sind. Die kann, wie oben beschrieben, zu einer Delamination der Schichten und zu einem frühzeiteigen Versagen der betroffenen Sekundärelemente führen.

Hersteller von Stromableiterfolien haben die beschriebene Problematik der Elektrodenschichthaftung erkannt und unterschiedliche Foliennachbearbeitungsschritte vorgeschlagen, einerseits eine Anwendung von elektrochemischer Abscheidung (siehe H.C. Shin, J. Dong und M.L. Liu, Nanoporous structures prepared by an electrochemical deposition process, Adv. Mater. 2003, 15 (19), S. 1610-1614, N.D. Nikolic, K.I. Popov, L.J. Pavlovic und M.G. Pavlovic, The effect of hydrogen codeposition on the morphology ofcopper electrodeposits I. The concept of effective overpotential, J. Electroanalyt. Chem., 2006, 588 (1), S. 88-98), und andererseits von Ätzverfahren (siehe C.C. Nguyen und S.W. Song, Interfacial structural stabilization on amorphous silicon anode for improved cycling performance in lithium-ion batteries, Electrochim. Acta 2010, 55 (8), S. 3026-3033). Allerdings erwiesen sich diese Verfahrensschritte als ineffizient, umweltbelastend und aufwändig. Zudem brachten sie inhomogene Ergebnisse hervor, welche sich in der Ausbildung von Spikes äußerten.

Die WO 2014/090892 A1 offenbart einen Materialverbund, welcher ein Partikel aufweisendes Beschichtungsmaterial und ein Basismaterial, insbesondere eine Partikelelektrode und einen Stromableiter, umfasst, wobei das Basismaterial an seiner Oberfläche Vertiefungen aufweist, welche am Ort der Vertiefungen zu einer verringerten Dicke des Basismaterials führen, wobei die Vertiefungen Abweichungen von einer ebenen Oberfläche des Basismaterials darstellen. Hierbei werden die geometrischen Abmessungen und/oder die Formen der Partikel und der Vertiefungen derart aneinander angepasst, dass ein oder mehrere Partikel in die einzelnen Vertiefungen geometrisch ganz oder teilweise hineinpassen oder durch Kraft- und/oder Energieeinwirkung so fest haftend darin eingedrungen sind, dass diese Haftung zumindest teilweise auf mechanischen Kräften zwischen den Partikeln und dem Basismaterial beruht. Hierzu wird vorgeschlagen, einerseits die Struktur und die Oberflächengeometrie des Stromableiters vorzubereiten und zu verändern, um die Haftung der Elektrodenpartikel auf der Oberflache des Stromableiters durch mechanisches Anrauen mittels Sandstrahlen oder Sandpapier geeigneter Körnung oder durch punktgenaue Laserbehandlung zur Perforation oder Oberflächenstrukturierung des Basismaterials, etwa mittels Ultrakurzpuls-Laserbehandlung, zu verbessern. Andererseits kann die Oberflächengeometrie der Partikel, insbesondere durch Veränderung der Partikelgeometrie durch Mahlen oder Sieben und/oder durch Wahl der Herstellung der Partikel, z.B. der chemischen Fällungsbedingungen, an die Oberflächenstruktur des Stromableiters angepasst werden.

Die US 8,962,190 B1 offenbart Elektroden, die über eine elektrisch leitfähige, Poren aufweisende Schicht, ein Energiespeichermaterial und elektrische leitfähige Erhebungen, welche sich aus der Schicht heraus in das Energiespeichermaterial hinein erstrecken, verfügen. Die Poren aufweisende Schicht dient hierbei insbesondere zur Aufnahme eines flüssigen Elektrolyten, welcher im Vergleich zu dem Metallionen über eine höhere Ionenleitfähigkeit für Metallionen, z.B. Li⁺, verfügt, wodurch die Erhebungen Pfade für die Metallionen ausbilden, die sich auf diese Weise schneller und/oder tiefer in das Metallionen einbringen lassen.

Aus der DE 10 2008 016 682 A1 ist ein Verfahren zur Mikrostrukturierung von Elemente einer Brennstoffzelle bekannt, welches dazu eingesetzt wird, um das Wassermanagement zu verbessern. Zur Erzeugung der Mikrostrukturierung wird Oberflächenmaterial einer Separatorplatte und/oder eines Gasdiffusionsmediums selektiv, insbesondere mittels einer Anwendung von Laserpulsen, abgetragen, C.A.Zuhlke, T.P. Anderson, D.R. Alexander, Fundamentals of layered nanoparticle covered pyramidal structures formed on nickel during femtosecond laser surface interactions, Applied Surface Science, 283, (2013), 648-653, beschreibt ein Verfahren zur Strukturierung der Oberfläche einer Nickelfolie mittels Ultrakurzpuls-Laserstrahlung.

### Aufgabe der Erfindung

Ausgehend hiervon, besteht die Aufgabe der vorliegenden Erfindung darin, ein elektrisch leitfähiges Basismaterial, ein Verfahren zur seiner Herstellung und seine Verwendung sowie einen elektrisch leitfähigen Schichtverbund, welcher das Basismaterial umfasst, ein Verfahren zur seiner Herstellung und seine Verwendung vorzuschlagen, welche die aufgeführten Nachteile und Einschränkungen des Standes der Technik zumindest teilweise überwinden.

Insbesondere soll die Erfindung die Eigenschaften und Leistungsfähigkeit des Elektrodenmaterials in einem Sekundärelement eines Akkumulators, vor allem in einer Lithium-Ionen-Batterie, verbessern, insbesondere dann, wenn multiskalige Materialkomposite oder pulverförmige Elektroden als Beschichtungsmaterial eingesetzt werden. Hierzu soll insbesondere das elektrisch leitfähige Basismaterial derart ausgestaltet sein, dass sich eine gute Anbindung zwischen elektrisch leitfähigen Partikeln in dem Elektrodenmaterial und der zugewandten Oberfläche des Basismaterials ausbildet und bestehen bleibt, auch dann wenn das Elektrodenmaterial hohen Volumenänderungen ausgesetzt wird. Weiterhin sollen Verfahren offenbart werden, welche eine möglichst einfache Herstellung des elektrisch leitfähigen Basismaterials und des das Basismaterial umfassenden Schichtverbunds ermöglichen. Schließlich sollen bevorzugte Verwendungen für das Basismaterial und den Schichtverbund angegeben werden.

### Offenbarung der Erfindung

Diese Aufgabe wird durch ein elektrisch leitfähiges Basismaterial, ein Verfahren zur seiner Herstellung und seine Verwendung sowie durch einen elektrisch leitfähigen Schichtverbund, welcher das Basismaterial umfasst, ein Verfahren zur seiner Herstellung und seine Verwendung mit den Merkmalen der unabhängigen Patentansprüche gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf', "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, das das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren unangetastet bleiben.

In einem ersten Aspekt betrifft die vorliegende Erfindung ein elektrisch leitfähiges Basismaterial, welches zur Aufnahme eines Beschichtungsmaterials, welches elektrisch leitfähige Partikel aufweist, eingerichtet ist. In Zusammenhang mit der vorliegenden Erfindung kann sich der Begriff "elektrisch leitfähig" auf eine elektronische Leitfähigkeit und/oder auf eine ionische Leitfähigkeit beziehen. Als Basismaterial dienen hierbei Metallfolien, vorzugsweise mit einer Dicke von 5 µm bis 50 µm, insbesondere von 10 µm bis 20 µm. Als Material für die Metallfolie eignen sich insbesondere Kupfer, Aluminium, Nickel, Lithium, dotiertes und/oder metallisiertes Silizium, metallisierte Polymerfolien, Gold und Silber; weitere Materialien sind jedoch denkbar.

Im vorliegenden Zusammenhang bezeichnet der Begriff der "Aufnahme" ein Aufbringen des Beschichtungsmaterials auf der gemäß der vorliegenden Erfindung ausgestalteten Oberfläche des Basismaterials, wozu insbesondere das unten näher erläuterte erfindungsgemäße Verfahren eingesetzt werden kann. Hierzu kann das Beschichtungsmaterial, insbesondere in Form einer dünnen Schicht, welche vorzugsweise eine Dicke von 100 nm bis 1000 µm aufweisen kann, auf die zur Aufnahme vorgesehene Oberfläche des Basismaterials aufgebracht werden, vorzugsweise derart, dass die in dem Beschichtungsmaterial vorhandenen elektrisch leitfähigen Partikel, welche auch als "Aktivpartikel" bezeichnet werden, eine möglichst gute Anhaftung an die Oberfläche des Basismaterials erfahren. Bevorzugt kann die Oberfläche des Basismaterials derart strukturiert sein, dass bereits bei Auftragen der Beschichtung etwa durch Aufbringen einer Pastenmasse auf die Oberfläche in einem in der Pastenmasse vorhandenen gießfähigen Schlicker eine Verzahnung zwischen den elektrisch leitfähigen Partikeln und der Oberfläche des Basismaterials auftritt. Die Struktur der Oberfläche ist vorzugsweise derart ausgestaltet, dass die multiskaligen Partikel, welche über Abmessungen von 10 nm bis zu 100 µm verfügen können, unabhängig von ihrer Größe möglichst jeweils passende Ankoppelstrukturen auf der Oberfläche vorfinden können.

Gemäß der vorliegenden Erfindung ist die zur Aufnahme der elektrisch leitfähigen Partikel vorgesehene Oberfläche des Basismaterials derart ausgestaltet, dass sie über eine hierarchische Struktur verfügt. Darüber hinaus können, etwa aus verfahrenstechnischen Erwägungen heraus, auch weitere Bereiche auf der Oberfläche des Basismaterials auf diese Art ausgestaltet sein. Im vorliegenden Zusammenhang bezeichnet der Begriff der "hierarchischen Struktur" eine Ausgestaltung der Oberfläche des Basismaterials in einer Weise, dass die Oberfläche eine Textur aufweist, die über eine mehrskalige Topographie verfügt. Insbesondere aus praktischen Erwägungen heraus, dass ein Einbringen weiterer Skalen in der Regel mit einem höheren Aufwand verbunden ist, weist die Textur der Oberfläche des Basismaterials eine zweiskalige Topographie auf, welche über die im Folgenden als "erste Struktur" und als "zweite Struktur" bezeichneten Texturen verfügt. Hierbei werden unter dem Begriff der "Topographie" Erhebungen und/oder Vertiefungen in Bezug auf ein Niveau einer festgelegten Oberfläche, welche zu diesem Zweck als ebene Fläche gedacht sein kann, verstanden, wobei der Begriff der "Skala" angibt, welche räumliche Abmessungen und/oder Abstände die Vertiefungen und/oder die Erhebungen jeweils aufweisen. Folglich verfügen die erste Erhebungen und/oder erste Vertiefungen über erste Abmessungen, während die zweiten Erhebungen und/oder zweiten Vertiefungen zweite Abmessungen aufweisen.

Gemäß der vorliegenden Erfindung weist die erste Struktur erste Erhebungen und/oder erste Vertiefungen in Bezug auf die Oberfläche des Basismaterials auf, während die zweite Struktur über zweite Erhebungen und/oder zweite Vertiefungen in Bezug auf die Oberfläche der ersten Struktur verfügt. Der hier beschriebene Unterschied im Hinblick auf den jeweiligen Bezug der Erhebungen und/oder Vertiefungen stellt die Grundlage dafür dar, dass die ersten Abmessungen die zweiten Abmessungen erfindungsgemäß um mindestens einen Faktor 10 übertreffen. In einer bevorzugten Ausgestaltung nehmen hierbei die ersten Abmessungen einen Wert von 1 µm bis 100 µm und die zweiten Abmessungen einen Wert von 100 nm bis 2000 nm an. In einer besonders bevorzugten Ausgestaltung nehmen hierbei die ersten Abmessungen einen Wert von 1 µm bis 50 µm, vorzugsweise von 5 µm bis 20 µm, und die zweiten Abmessungen einen Wert von 200 nm bis 1000 nm, vorzugsweise von 300 nm bis 900 nm an. Die Abmessungen beziehen sich hierbei auf eine strukturelle Größe der entsprechenden Erhebungen und/oder Vertiefungen, etwa auf deren laterale Breite oder, vorzugsweise, auf laterale Abstände zwischen einzelnen Erhebungen und/oder Vertiefungen.

Die damit ausgestaltete Oberfläche des Basismaterials verfügt über eine hierarchische Struktur. Diese Art der Topographie ermöglicht es, dass die in dem Beschichtungsmaterial auftretenden multiskaligen Partikel, welche über Abmessungen von 10 nm bis zu 100 µm verfügen können, unabhängig von ihrer Größe jeweils passende Ankoppelstrukturen auf der Oberfläche vorfinden können. Darüber hinaus können diese Strukturen zusätzlich als kapillare Förderstrukturen wirken, um, wie unten beschrieben, eine möglichst homogene Ausbreitung des gießfähigen Schlickers zu unterstützen. Wie weiterhin unten beschrieben wird, sind sowohl die erste Struktur als auch die zweite Struktur durch Beaufschlagung der Oberfläche des Basismaterials mittels Ultrakurzpuls-Laserstrahlung gleichzeitig erzeugbar.

Das unstrukturierte Basismaterial verfügt weiterhin über eine gesonderte Schicht, vorzugsweise eine gesonderte homogene Schicht, aus einem weiteren elektrisch leitfähigen Material. Beispielsweise kann eine Kupferfolie als das unstrukturierte Basismaterial dienen, wobei auf die Kupferfolie eine dünne Nickelschicht als die weitere Schicht aufgebracht ist. Andere Materialkombinationen sind jedoch denkbar. Die Oberfläche des strukturierten Basismaterials verfügt über eine hierarchische Struktur, wobei die erste Struktur erste Vertiefungen aufweist, an deren Oberfläche das Material des Basismaterials zu Tage tritt, während die zweiten Strukturen in Form von zweiten Vertiefungen und/oder zweiten Erhebungen in dem Material des Basismaterials ausgestaltet sind. Auf diese Weise kann auf der Oberfläche des derart ausgestalteten Basismaterials eine Topographie auftreten, welches auch als "chemisches Muster" bezeichnet werden kann. Im oben genannten Beispiel der dünnen magnetischen Nickelschicht auf der nicht-magnetischen Kupferfolie können sich so flächig magnetische Bereiche mit nicht-magnetischen Bereichen auf der Oberfläche des Basismaterials abwechseln. Mit dieser Kombination eines chemischen Musters mit der beschriebenen Topographie lässt sich die multiskalige mechanische Verankerung mit einer chemischen Verankerung des Beschichtungsmaterials erweitern. Weitere bevorzugte Ausgestaltungen betreffen eine Einbringung unterschiedlicher funktioneller Strukturgruppen auf die verschiedenen Bereiche, wie z.B. eine Beeinflussung eines Benetzungsverhaltens, etwa durch Einbringung polarer oder unpolarer Gruppen für nicht-wässrige bzw. wässrige Schlicker.

In einem weiteren Aspekt betrifft die vorliegende Erfindung einen elektrisch leitfähigen Schichtverbund, welcher zumindest ein oben oder unten beschriebenes elektrisch leitfähiges Basismaterial und ein elektrisch leitfähige Partikel aufweisendes Beschichtungsmaterial aufweist. Der Begriff "elektrisch leitfähig" kann sich hierbei auf eine elektronische Leitfähigkeit und/oder auf eine ionische Leitfähigkeit der Partikel, welche auch als "Aktivpartikel" bezeichnet werden können, beziehen. Wird der Schichtverbund als Kathode verwendet, werden etwa im Falle von Lithium-Ionen-Batterien typischerweise LiNiₓMn_{y}Co_{z}O₂ (NMC), LiFePO₄ (LFP), LiCoO₂ (LCO), LiMn₂O₄ (LMO) oder Schwefel(S)/Lithium-Schwefel (Li-S) aufweisende Aktivpartikel in dem Beschichtungsmaterial eingesetzt. Wird dagegen der Schichtverbund als Anode eingesetzt, werden typischerweise Kohlenstoff-Modifikationen, Silizium, Graphit-Silizium-Gemische, Zinnoxide, Lithium-Titanate oder metallisches Lithium aufweisende Aktivpartikel verwendet. Als Kohlenstoff-Modifikationen sind, unabhängig davon ob diese überwiegend über Sp²- oder Sp³- Bindungen verfügen, verschiedene Arten von Graphiten, etwa synthetische Graphite, natürlicher Graphite oder Graphitflakes, Graphene, Fullerene, ein- oder mehrwandige Kohlenstoff-Nanoröhren oder Gemische hiervon einsetzbar. Andere Materialien sind jedoch denkbar.

Darüber können weitere Bestandteile, vorzugsweise Leitfähigkeitsadditive, z.B. Leitruß, insbesondere zur Verbesserung der elektrischen Leitfähigkeit in dem Beschichtungsmaterial, und/oder Polymerbinder, z.B. Polyvinylidenfluorid (PVDF), insbesondere zur Verbesserung der Anbindung der elektrischen Partikel untereinander und insbesondere an die Oberfläche des Basismaterials, innerhalb des Schichtverbunds vorgesehen sein. Sowohl die elektrisch leitfähigen Aktivpartikel als auch die Leitfähigkeitsadditive und/oder Polymerbinder können vorzugsweise in Form von Primärpartikeln, Aggregaten und/oder Agglomeraten mit Abmessungen von 10 nm bis 100 µm vorliegen, welche sich in einer besonderen Ausgestaltung auf zwei voneinander getrennte Größenbereiche im Nanometerbereich, insbesondere von 10 nm bis 100 nm, und im Mikrometerbereich, insbesondere von 1 µm bis 50 µm, aufteilen können.

Der Schichtverbund ist erfindungsgemäß derart ausgestaltet, dass die Partikel an ersten Erhebungen und/oder ersten Vertiefungen in einer ersten Struktur auf der Oberfläche des Basismaterials und/oder an zweiten Erhebungen und/oder zweiten Vertiefungen in einer zweiten Struktur auf der Oberfläche der ersten Struktur anhaften. Diese Art der Topographie ermöglicht es, dass die darin vorhandenen multiskaligen Partikel unabhängig von ihrer Größe über zumindest einen Teil des Bereichs von 10 nm bis 100 µm jeweils passende Ankoppelstrukturen auf der Oberfläche vorfinden können. Dies trifft insbesondere auch für einen Fall zu, dass in dem Beschichtungsmaterial die Aktivpartikel in eine Phase, welche Polymerbinder und/oder Leitfähigkeitsadditive umfassen kann, eingebracht sein können, auch für eine Konstellation, dass diese sich auf die oben genannten zwei voneinander getrennten Größenbereiche, etwa von 10 nm bis 100 nm (Nanometerbereich) und von 1 µm bis 50 µm (Mikrometerbereich), verteilen sollten. Im Unterschied zum Stand der Technik eignet sich das oben oder unten beschriebene elektrisch leitfähige Basismaterial daher insbesondere auch zur Aufnahme eines derartigen Beschichtungsmaterials.

Für weitere Einzelheiten in Bezug auf den Schichtverbund wird auf die Beschreibung des erfindungsgemäßen Basismaterials verwiesen.

In einem weiteren Aspekt betrifft die vorliegende Erfindung ein Verfahren zur Herstellung eines elektrisch leitfähigen Basismaterials zur Aufnahme eines Beschichtungsmaterials, welches elektrisch leitfähige Partikel aufweist, insbesondere zur Herstellung eines oben oder unten beschriebenen Basismaterials. Das Verfahren umfasst hierbei die folgenden Schritte a) und b), welche vorzugsweise in der angegebenen Reihenfolge, beginnend mit Schritt a) und endend mit Schritt b), durchgeführt werden, wobei die beiden Schritte zumindest auch teilweise gleichzeitig ausgeführt werden können:
a) Bereitstellen eines unstrukturierten elektrisch leitfähigen Basismaterials in Form einer Metallfolie; und
b) Beaufschlagen zumindest einer zur Aufnahme der elektrisch leitfähigen Partikel vorgesehenen Oberfläche des Basismaterials mittels Ultrakurzpuls-Laserstrahlung, wodurch eine erste Struktur in Form von ersten Erhebungen und/oder ersten Vertiefungen in Bezug auf die Oberfläche des Basismaterials und gleichzeitig eine zweite Struktur in Form von zweiten Erhebungen und/oder zweiten Vertiefungen in Bezug auf die Oberfläche der ersten Struktur derart erzeugt werden, dass die ersten Erhebungen und/oder die ersten Vertiefungen erste Abmessungen und die zweiten Erhebungen und/oder die zweiten Vertiefungen zweite Abmessungen aufweisen, wodurch die ersten Abmessungen um mindestens einen Faktor 10 größer als die zweiten Abmessungen hergestellt werden.

Gemäß Schritt a) wird ein unstrukturiertes elektrisch leitfähiges Basismaterial bereitgestellt. Als Basismaterial werden hierbei Metallfolien, vorzugsweise mit einer Dicke von 5 µm bis 50 µm, insbesondere von 10 µm bis 20 µm, bereitgestellt. Als Material für die Metallfolie eignen sich vorzugsweise Kupfer, Aluminium, Nickel, Lithium, dotiertes und/oder metallisiertes Silizium, metallisierte Polymerfolien, Gold und Silber; andere Materialien sind jedoch denkbar.

Gemäß Schritt b) wird zumindest eine zur Aufnahme der elektrisch leitfähigen Partikel vorgesehenen Oberfläche des Basismaterials mittels Ultrakurzpuls-Laserstrahlung beaufschlagt. Hierdurch werden eine erste Struktur in Form von ersten Erhebungen und/oder ersten Vertiefungen in Bezug auf die Oberfläche des Basismaterials und gleichzeitig eine zweite Struktur in Form von zweiten Erhebungen und/oder zweiten Vertiefungen in Bezug auf die Oberfläche der ersten Struktur derart erzeugt, dass die ersten Erhebungen und/oder die ersten Vertiefungen erste Abmessungen und die zweiten Erhebungen und/oder zweiten Vertiefungen zweite Abmessungen aufweisen, wobei die ersten Abmessungen um mindestens einen Faktor 10 größer sind als die zweiten Abmessungen. In einer besonders bevorzugten Ausgestaltung erfolgt das Beaufschlagen zumindest der zur Aufnahme der elektrisch leitfähigen Partikel vorgesehenen Oberfläche des Basismaterials mittels der Ultrakurzpuls-Laserstrahlung derart, dass die ersten Abmessungen auf 1 µm bis 100 µm, bevorzugt von 1 µm bis 50 µm, besonders bevorzugt von 5 µm bis 20 µm, und die zweiten Abmessungen auf 100 nm bis 2000 nm, bevorzugt von 200 nm bis 1000 nm, besonders bevorzugt von 300 nm bis 900 nm, eingestellt werden können.

In einer besonders bevorzugten Ausgestaltung kann die Ultrakurzpuls-Laserstrahlung mittels eines Femtosekunden-Lasers und/oder eines Picosekunden-Lasers erzeugt werden, wobei für die Laserstrahlung insbesondere folgenden Parameter innerhalb folgender Parameterbereichen gewählt werden können:
- Pulslänge von 50 fs bis 100 ps, insbesondere von 300 fs bis 100 ps;
- Wellenlänge von 190 nm bis 3 µm, insbesondere 255 nm bis 1100 nm;
- Pulsfrequenz von 1 Hz bis 100 MHz, insbesondere von 100 kHz bis 10 MHz;
- Laserleistung von 1 mW bis 1 kW, insbesondere von 100 mW bis 200 W; und
- Fokusdurchmesser von 1 µm bis 1000 µm, insbesondere von 5 µm bis 100 µm.

Durch Wahl der Parameter für die Laserstrahlung innerhalb der genannten Parameterbereiche kann insbesondere ein thermischer Eintrag in das Basismaterial und eine damit einhergehende Schmelzbildung an der Oberfläche des Basismaterials vermieden werden. Weiterhin kann durch eine Beaufschlagung der Oberfläche des Basismaterials durch ultrakurze Laserpulse ein weiterer Effekt angewandt werden, welcher darin besteht, dass sich auf einer metallischen Oberfläche des Basismaterials so genannte "Nano-Rippel-Strukturen" ausbilden. Der Begriff der Nano-Rippel-Strukturen bezeichnet hierbei eine Topographie auf der bestrahlten Oberfläche des Basismaterials, welche in Form einer Vielzahl von zueinander parallelen Rillen mit zweiten Abmessungen insbesondere im oben genannten bevorzugten Bereich bzw. besonders bevorzugten Bereich vorliegen. Zur Ausbildung der Nano-Rippel-Strukturen, welche insbesondere in Form einer selbstorganisierten Nano-Strukturierung erfolgen kann, ist vorzugsweise eine detaillierte Abstimmung der für die eingesetzte Ultrakurzpuls-Laserstrahlung möglichen Prozessparameter erforderlich.

In dieser besonders bevorzugten Ausgestaltung kann somit eine hierarchische Strukturierung auf dem Basismaterial mit ersten Strukturen im Mikrometerbereich und mit zweiten Strukturen im Nanometerbereich bereits in einem Verfahrensschritt erfolgen. Das Herstellungsverfahren kann bevorzugt an Umgebungsluft durchgeführt werden; es eignen sich aber auch verschiedene Prozessgasatmosphären, wie z.B. aus He, N₂, Ar oder Gasgemische aus diesen und weiteren Gasen. Durch die Anwendung des vorliegenden Verfahrens sind - bei gleichbleibender Strukturierungsqualität - insbesondere keine Nachbearbeitungsprozesse mehr erforderlich, jedoch nach wie vor möglich.

In einem weiteren Aspekt betrifft die vorliegende Erfindung ein Verfahren zur Herstellung eines elektrisch leitfähigen Schichtverbunds, welcher zumindest ein oben oder unten beschriebenes elektrisch leitfähiges Basismaterial und ein elektrisch leitfähige Partikel aufweisendes Beschichtungsmaterial aufweist, insbesondere zur Herstellung eines oben oder unten beschriebenen Schichtverbunds. Das Verfahren umfasst hierbei die folgenden Schritte c) bis e), welche vorzugsweise in der angegebenen Reihenfolge, beginnend mit Schritt c) und endend mit Schritt e), durchgeführt werden, wobei zwei oder mehrere der Schritte zumindest auch teilweise gleichzeitig ausgeführt werden können:
c) Aufbringen einer gießfähigen Pastenmasse, in welche zumindest ein Lösungsmittel und die elektrisch leitfähigen Partikel eingebracht sind, auf die zur Aufnahme der elektrisch leitfähigen Partikel vorgesehene Oberfläche eines unten oder oben beschriebenen Basismaterials oder eines nach einem der obigen oder unteren Beschreibung hergestellten Basismaterials;
d) Verteilen der Pastenmasse durch Kapillarwirkung auf der Oberfläche des Basismaterials; und
e) Trocknen der Pastenmasse.

Wird das Basismaterial gemäß den oben oder unten beschriebenen Schritten a) und b) hergestellt, so können sich hieran die aufgeführten Schritte c) und e) anschließen.

Gemäß Schritt c) wird eine gießfähige Pastenmasse, welche insbesondere in Form eines gießfähigen Schlickers vorliegen kann, auf die zur Aufnahme der elektrisch leitfähigen Partikel vorgesehene Oberfläche des elektrisch leitfähigen Basismaterials, welches bevorzugt in Form einer Stromableiterfolie als Stromableiter eingesetzt wird, aufgebracht. Unter dem Begriff des "Stromableiters" wird hierbei ein elektrisch leitfähiges Material verstanden, welches dazu eingerichtet ist, um eine elektrisch leitende Verbindung zwischen einem Element eines Akkumulators und einem zugehörigen elektrischen Anschluss herzustellen.

Die Verteilung der Pastenmasse auf der Oberfläche des Basismaterials erfolgt gemäß Schritt d) durch Kapillarwirkung, welche auf der Oberfläche des Basismaterials ausgeübt wird. Wie oben und unten näher erläutert, kann die auf der Oberfläche des Basismaterials gemäß der vorliegenden Erfindung vorhandene Topographie in Form einer hierarchischen Struktur zusätzlich als kapillare Förderstruktur wirken, um die möglichst homogene Verteilung der gießfähigen Pastenmasse zu fördern. In die Pastenmasse können hierbei einerseits die elektrisch leitfähigen Partikel, welche vorzugsweise in Form von Primärpartikeln, Aggregaten und/oder Agglomeraten mit Abmessungen von 10 nm bis 100 µm eingesetzt werden. Wird das Basismaterial als Stromableiter an der Kathode verwendet, werden etwa im Falle von Lithium-Ionen-Batterien typischerweise LiNiₓMn_{y}Co_{z}O₂ (NMC), LiFePO₄ (LFP), LiCoO₂ (LCO), LiMn₂O₄ (LMO) oder Schwefel(S)/Lithium-Schwefel (Li-S) aufweisende Aktivpartikel in der Pastenmasse eingesetzt. Wird dagegen das Basismaterial als Stromableiter an der Anode eingesetzt, werden typischerweise Kohlenstoff-Modifikationen, Silizium, Graphit-Silizium-Gemische, Zinnoxide, Lithium-Titanate oder metallisches Lithium aufweisende Aktivpartikel verwendet. Als Kohlenstoff-Modifikationen lassen sich verschiedene Arten von Graphiten, etwa synthetische Graphite, natürlicher Graphite oder Graphitflakes, Graphene, Fullerene, ein- oder mehrwandige Kohlenstoff-Nanoröhren oder Gemische hiervon einsetzen. Andere Materialien sind jedoch möglich.

Andererseits umfasst die Pastenmasse mindestens ein Lösungsmittel, durch dessen Verdampfen das Trocknen oder Trocknenlassen der Pastenmasse gemäß Schritt e) unterstützt wird. Als Lösungsmittel wird typischerweise N-Methyl-2-pyrrolidon (NMP) eingesetzt; andere Lösungsmittel, insbesondere auch wasserbasierte Lösungsmittel, sind jedoch denkbar. Darüber hinaus kann die Pastenmasse weitere Bestandteile umfassen, vorzugsweise Leitfähigkeitsadditive, z.B. Ruß, insbesondere zur Verbesserung der elektrischen Leitfähigkeit in dem späteren Elektrodenmaterial und/oder mindestens einen Polymerbinder, z.B. Polyvinylidenfluorid (PVDF), insbesondere zur Verbesserung der Anbindung der elektrischen Partikel untereinander und an die Oberfläche des Basismaterials. Hierbei können die die Leitfähigkeitsadditive und/oder Polymerbinder zusammen mit den elektrisch leitfähigen Aktivpartikeln vorzugsweise in Form von Primärpartikeln, Aggregaten und/oder Agglomeraten mit Abmessungen von 10 nm bis 100 µm vorliegen, welche sich in einer besonderen Ausgestaltung auf zwei voneinander getrennte Größenbereiche im Nanometerbereich, insbesondere von 10 nm bis 100 nm, und im Mikrometerbereich, insbesondere von 1 µm bis 50 µm, aufteilen können. Eine damit erzielbare gute Anbindung der auf diese Weise hergestellten schichtförmigen Elektrode an den Stromableiter kann insbesondere eine Schichtdelamination des Elektrodenmaterials von dem Basismaterial vermindern oder verhindern und den elektrischen Kontakt zwischen Schicht und Stromableiter verbessern.

Für weitere Einzelheiten in Bezug auf die vorliegenden Herstellungsverfahren wird auf die jeweilige Beschreibung der damit herstellbaren Gegenstände verwiesen.

In einem weiteren Aspekt betrifft die vorliegende Erfindung eine bevorzugte Verwendung des elektrisch leitfähigen Basismaterials als Stromableiter für ein elektrisch leitfähige Partikel aufweisendes Elektrodenmaterial. Wie bereits beschrieben, wird unter dem Begriff des "Stromableiters" ein elektrisch leitfähiges Material verstanden, welches dazu eingerichtet ist, um eine elektrisch leitende Verbindung zwischen einem Element eines Akkumulators und einem zugehörigen elektrischen Anschluss herzustellen.

In einem weiteren Aspekt betrifft die vorliegende Erfindung eine bevorzugte Verwendung des elektrisch leitfähigen Schichtverbunds, welcher mindestens ein elektrisch leitfähiges Basismaterial umfasst, in einem Sekundärelement eines Akkumulators, insbesondere in einer Lithium-Ionen-Batterie. Wie bereits erwähnt, kann sich im Zusammenhang mit der vorliegenden Erfindung, der Begriff "elektrisch leitfähig" sowohl auf eine elektronische Leitfähigkeit als auch auf eine ionische Leitfähigkeit beziehen. Darüber hinaus kann der Schichtverbund auch in zukünftigen hochkapazitiven Sekundärelementen, etwa auf der Basis von Silizium, Lithium-Schwefel oder Zinnoxid, eingesetzt werden. Ein Einsatz in weiteren Akkumulatoren ist jedoch denkbar. Im vorliegenden Zusammenhang bezeichnet der Begriff des "Sekundärelements" ein einzelnes wiederaufladbares Speicherelement für elektrische Energie, insbesondere im Gegensatz zur einem nicht oder nur begrenzt wiederaufladbaren Primärelement. Zur Herstellung eines wiederaufladbaren Speicherelements können jeweils ein als Kathode und ein als Anode ausgeführter Schichtverbund, durch einen Separator voneinander getrennt, zusammengefügt werden. Eine Zusammenschaltung der Sekundärelemente in Reihenschaltung und/oder in Parallelschaltung wird üblicherweise als "Akkumulator" bezeichnet.

Für weitere Einzelheiten in Bezug auf die vorliegenden Verwendungen wird auf die jeweilige Beschreibung der zugehörigen Gegenstände verwiesen.

In einem weiteren Aspekt betrifft die vorliegende Erfindung einen Akkumulator, welcher mindestens einen erfindungsgemäßen elektrisch leitfähigen Schichtverbund, welcher mindestens ein erfindungsgemäßes elektrisch leitfähiges Basismaterial umfasst, in mindestens einem Sekundärelement aufweist. Bei dem Akkumulator kann es sich insbesondere um eine Lithium-Ionen-Batterie handeln; andere Typen von Akkumulatoren, welche über Sekundärelemente, etwa auf der Basis von Silizium, Lithium-Schwefel oder Zinnoxid, verfügen, sind jedoch ebenfalls denkbar. Für weitere Einzelheiten in Bezug auf den Akkumulator wird auf die übrige Beschreibung verwiesen.

### Vorteile der Erfindung

Die vorliegende Erfindung weist eine Reihe von Vorteilen gegenüber den aus dem Stand der Technik bekannten Basismaterialien und Basismaterialien umfassende Schichtverbünden und den zugehörigen Herstellungsverfahren insbesondere im Hinblick auf die jeweils bevorzugten Verwendungen auf.

Die beschriebene Erfindung kann die Leistung der in einem Sekundärelement vorhandenen Elektroden verbessern, insbesondere dann, wenn die eingangs genannten elektrisch leitfähigen multiskaligen Materialkomposite oder pulverförmigen Elektroden, welche über elektrisch leitfähige Partikel, insbesondere Primärpartikel, Aggregate und/oder Agglomerate mit Abmessungen von 10 nm bis 100 µm, verfügen, eingesetzt werden. Durch die Verwendung hierarchisch strukturierter Oberflächen für den Stromableiter lassen sich neuartige Elektrodenmaterialien verwenden, welche sich wegen schlechter Anbindung an den Stromableiter aufgrund des Beschichtungsprozesses sowie infolge des Auftretens hoher Volumenausdehnungen während der elektrochemischen Zyklisierung und nachfolgender Delamination bisher nur sehr begrenzt einsetzen ließen. Hieraus ergeben sich zudem vorteilhafterweise lange Zyklenlebensdauern und verbesserte mechanische Schichteigenschaften. Aufgrund der verbesserten Schichthaftung erhöht sich die Flexibilität bei der Auswahl eines möglichen Zelldesigns, z.B. Wickelzellen, Pouch-Zellen oder prismatische Zellen.

Bei der Elektrodenvereinzelung durch Stanzen sowie bei der Verschweißung der Elektroden-/Separatoren-Trockenstapel durch Ultraschallschweißen treten bisher erhebliche lokale mechanische Belastungen auf, die aufgrund des sprödes Verhaltens zu einer Delamination oder einem Schichtversagen führen können. Diese qualitäts- und/oder lebensdauerbestimmenden Prozesse lassen sich durch die erfindungsgemäße Oberflächenstrukturierung der Stromableiter und/oder durch eine selektive Modifizierung an kritischen Zonen, insbesondere an den Kantenbereichen und den Schweißkontakten, verbessern. Die lokale hierarchische Texturierung an den Beschichtungskanten kann zudem zu einer deutlichen Reduzierung der Schichtwulstbildung führen und infolge der Kapillarwirkung bei der Beschichtung die Schichtdicke zu einer Homogenisierung der Schichtdicke über den gesamten Beschichtungsbereich führen, was insbesondere eine Einsparung von Aktivmaterial sowie definierte Zellbedingungen, definierte Elektrodendicke und definierte Beladung fördern kann. Die Kanäle in den Stromableitern können als Kapillare für den Elektrolyt eingesetzt werden und so die Benetzung bei der Herstellung des Schichtverbunds homogenisieren. Insgesamt kann durch den homogeneren Beschichtungsprozess weniger Lösungsmittel erforderlich sein, der Trocknungsprozess kann dadurch verkürzt und robuster ausgestaltet werden, was insgesamt zu einer Erhöhung des Produktionsdurchsatzes bei der Herstellung der Sekundärelemente genutzt werden kann.

### Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Im Einzelnen zeigen:
- Figur 1: einen schematischen Vergleich in Form von Querschnitten zwischen einem Basismaterial und einem Schichtverbund gemäß dem Stand der Technik (Fig. 1a) und gemäß der vorliegenden Erfindung (Fig. 1b bis 1d in jeweils höherer Detailvergrößerung);
- Figur 2: eine schematische Darstellung in Form von Querschnitten der ersten Struktur (Fig. 2a bis 2c) und der hierarchischen Struktur (Fig. 2d bis 2f) von verschiedenartigen Topographien auf der Oberfläche des Basismaterials;
- Figur 3: eine schematische Darstellung des Verfahrens zur Herstellung des Schichtverbunds;
- Figur 4: rasterelektronenmikroskopische Aufnahmen (REM-Bilder) einer strukturierten Aluminiumfolie (Fig. 4a) und einer Kupferfolie (Fig. 4b);
- Figur 5: REM-Bilder von strukturierten Basismaterialien aus Kupferfolien mit einer jeweils hierauf aufgebrachten Nickelschicht mit unterschiedlichen Abständen der ersten Strukturen sowie in verschiedener Größenauflösung;
- Figur 6: REM-Bilder eines Schichtverbunds gemäß dem Stand der Technik (Fig. 6a) und gemäß der vorliegenden Erfindung (Fig. 6b);
- Figur 7: eine schematische Darstellung einer Vorrichtung zur Herstellung eines erfindungsgemäßen elektrisch leitfähigen Basismaterials; und
- Figur 8: eine schematische Darstellung einer selektiven und/oder lokalen Strukturierung der Oberfläche des Basismaterials an Schnittkanten, Beschichtungsrändern und/oder Schweißkontakten im Querschnitt (Fig. 8a und 8b) bzw. in Draufsicht (Fig. 8c).

### Beschreibung der Ausführungsbeispiele

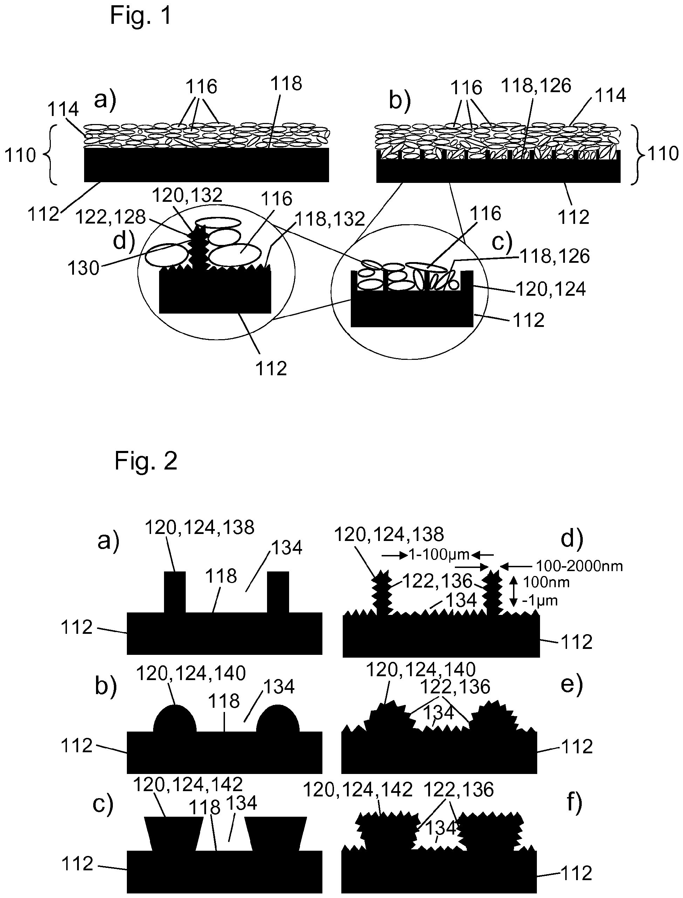

Figur 1a zeigt zum Vergleich in Form eines Querschnitts schematisch einen aus dem Stand der Technik bekannten elektrisch leitfähigen Schichtverbund 110, welcher über ein in Form einer Metallfolie vorliegendes elektrisch leitfähiges Basismaterial 112, welches vorzugsweise eine Dicke von 5 µm bis 50 µm, insbesondere von 10 µm bis 20 µm, aufweist, und über ein hierauf in Form einer dünnen Schicht aufgebrachtes Beschichtungsmaterial 114 verfügt, wobei das Beschichtungsmaterial 114 eine Vielzahl von elektrisch leitfähigen Partikeln 116 aufweist, welche möglichst gut auf einer zur Aufnahme der Partikel 116 vorgesehenen Oberfläche 118 anhaften sollen.

Insbesondere zur Erzielung einer verbesserten Anhaftung der Partikel 116 auf der Oberfläche 118 des Basismaterials 112 sind im Gegensatz hierzu in den Figuren 1b bis 1d in Form von Querschnitten in jeweils zunehmender Detailvergrößerung der Schichtverbund 110 und das Basismaterial 112 gemäß der vorliegenden Erfindung dargestellt. Hierzu weist die zur Aufnahme der elektrisch leitfähigen Partikel vorgesehene Oberfläche 118 des Basismaterials 112 eine hierarchische Struktur auf, welche eine erste Struktur 120 und eine zweite Struktur 122 umfasst. Im vorliegenden Ausführungsbeispiel gemäß den Figuren 1b bis 1d zeigt die erste Struktur 120 sowohl erste Erhebungen 124 als auch erste Vertiefungen 126 in Bezug auf die Oberfläche 118 des Basismaterials 112, während die zweite Struktur 122 sowohl zweite Erhebungen 128 als auch zweite Vertiefungen 130 in Bezug auf die Oberfläche 132 der ersten Struktur 120 aufweist. Für die vorliegende Erfindung ist es unerheblich, dass hierbei die Oberfläche 132 der ersten Struktur 120 auch teilweise mit der Oberfläche 118 des Basismaterials 112 übereinstimmt.

In den Figuren 2a bis 2c sind schematisch in Form von Querschnitten verschiedenartige Topographien lediglich der ersten Struktur 120 auf der Oberfläche 118 des Basismaterials 112 dargestellt, während die Figuren 2d bis 2f die gesamte hierarchische Struktur auf der Oberfläche 118 des Basismaterials 112 zeigen. Hieraus geht hervor, dass die Oberfläche 118 des Basismaterials 112 mit unterschiedlichen hierarchischer Texturen ausgestattet sein kann. Die Figuren 2a bis 2f zeigen beispielhaft aus den ersten Strukturen 120 gebildete Kanäle 134, in welchen die zweite Struktur 122 in Form von Rippeln sowohl in den Kanälen 134 als auch an den Seitenwänden 136 der Kanäle 134 eingebracht ist. Die ersten Erhebungen 124 können hierbei insbesondere einen eckigen Querschnitt 138 (siehe Figuren 2a und 2d) oder einen gerundeten Querschnitt 140 aufweisen (siehe Figuren 2b und 2e) und hierbei gegebenenfalls über Hinterschnitte 142 verfügen.

Aus den nicht maßstäblichen Darstellungen in den Figuren 2a bis 2f geht hervor, dass die die ersten Erhebungen 124 und die ersten Vertiefungen 126 in den vorliegenden Ausführungsbeispielen erste Abmessungen im Bereich von 1 µm bis 100 µm aufweisen, während die zweiten Erhebungen 128 und die zweiten Vertiefungen 130 über zweite Abmessungen im Bereich von 100 nm bis 2000 nm verfügen, so dass die erfindungsgemäße Vorgabe, dass die ersten Abmessungen die zweiten Abmessungen um mindestens einen Faktor 10 übertreffen, auch in den vorliegenden Ausführungsbeispielen erfüllt ist.

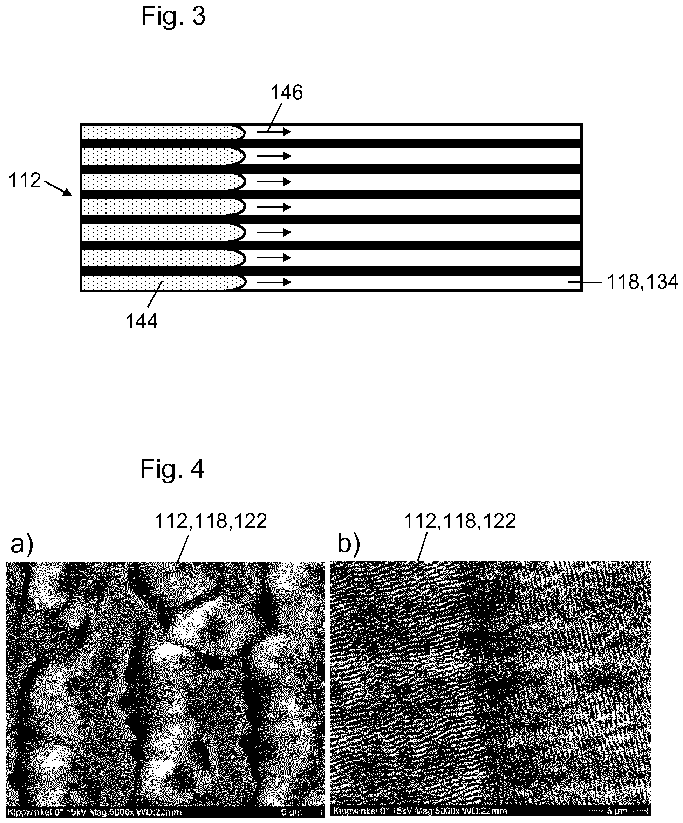

Figur 3 zeigt eine schematische Darstellung insbesondere der Schritte c) und d) des erfindungsgemäßen Verfahrens zur Herstellung des Schichtverbunds 110. Gemäß Schritt c) wird hierzu eine Pastenmasse 144, welche insbesondere in Form eines gießfähigen Schlickers vorliegen kann, auf die zur Aufnahme der elektrisch leitfähigen Partikel 116 vorgesehene Oberfläche 118 des elektrisch leitfähigen Basismaterials 112, welches mit einer hierarchischen Struktur, wie z.B. in den Figuren 2d bis 2f dargestellt, versehen ist, aufgebracht. Die Pastenmasse umfasst hierbei einerseits die elektrisch leitfähigen Partikel 116 , welche vorzugsweise in Form von Primärpartikeln, Aggregaten und/oder Agglomeraten mit Abmessungen von 10 nm bis 100 µm vorliegen. Andererseits umfasst die Pastenmasse mindestens ein Lösungsmittel, durch dessen Verdampfen die Trocknung der Pastenmasse 144 gemäß Schritt e) unterstützt wird. Darüber hinaus kann die Pastenmasse 144 weiterhin Leitfähigkeitsadditive und/oder mindestens einen Polymerbinder aufweisen.

Wie weiterhin in Figur 3 schematisch dargestellt, erfolgt die Verteilung der Pastenmasse 144 auf der Oberfläche 118 des Basismaterials 112 gemäß Schritt d) durch Kapillarwirkung, welche auf der Oberfläche 118 des Basismaterials 112 ausgeübt wird. Hierbei erzeugen die im vorliegenden Ausführungsbeispiel auf der Oberfläche 118 des Basismaterials 112 vorhandene Kanäle 134 zusätzlich Kapillarkräfte 146 in Bewegungsrichtung, wodurch eine möglichst homogene Verteilung der Pastenmasse 144 über die Kanäle 134 gefördert wird.

Die Figuren 4a und 4b zeigen rasterelektronenmikroskopische Aufnahmen (REM-Bilder) einer strukturierten Aluminiumfolie (Fig. 4a) und einer Kupferfolie (Fig. 4b), welche jeweils als das Basismaterial 112 zur Herstellung des Schichtverbunds, wie z.B. gemäß Figur 3, eingesetzt werden können. Die Größe der Strukturen ergibt sich aus der jeweiligen Größenangabe im Balken unten rechts. Hieraus ist die hierarchische Struktur auf der Oberfläche 118 des Basismaterials 112, d.h. sowohl die ersten Strukturen 120 als auch die zweiten Strukturen 122 erkennbar. Außerdem ist aus den Figuren 4a und 4b ersichtlich, dass sich je nach Wahl des Materials für das Basismaterial 112 als auch je nach Einstellung der Parameter bei der Strukturierung der Oberfläche 118 des zunächst unstrukturierten Basismaterials 112 unterschiedliche hierarchische Strukturen auf der Oberfläche 118 des Basismaterials 112 erzeugen lassen.

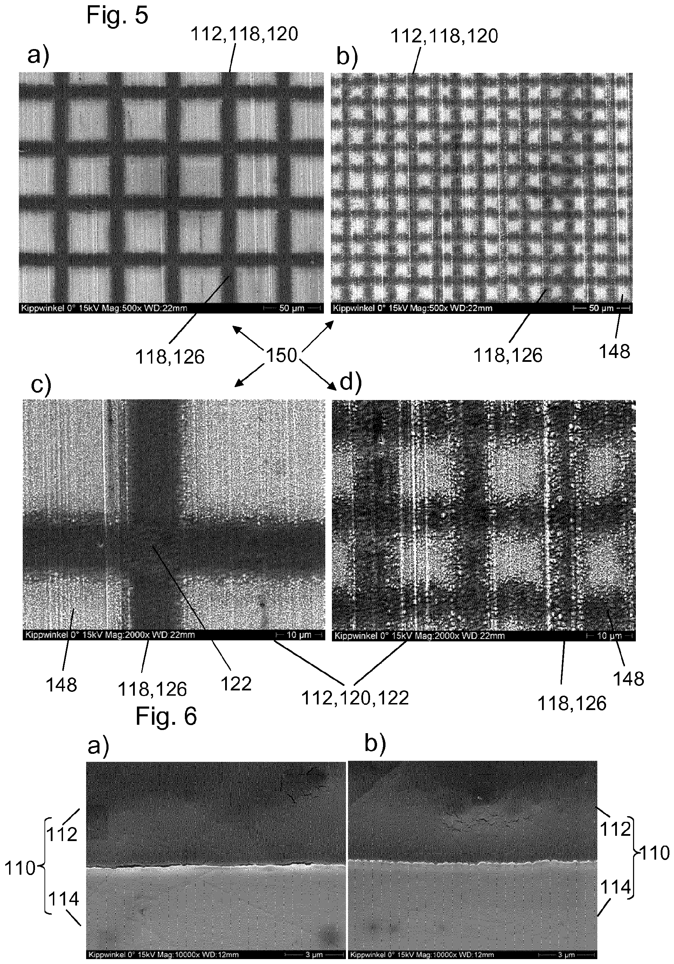

Die Figuren 5a bis 5d zeigen jeweils REM-Bilder von verschieden strukturierten Basismaterialien 112 in unterschiedlicher Größenauflösung (siehe Größenangabe im Balken unten rechts) bzw. unterschiedlichen Abständen der ersten Strukturen 120. Die Figur 5c stellt hierbei eine Detailvergrößerung eines Ausschnitts aus der Figur 5a dar; ebenso die Figur 5d aus der Figur 5b. Hierbei dient jeweils eine Kupferfolie als das unstrukturierte Basismaterial 112 und eine jeweils auf der Oberfläche des unstrukturierten Basismaterials 112 aufgebrachte Nickelschicht als gesonderte Schicht 148 eines weiteren elektrisch leitfähigen Materials. In diesen Ausführungsbeispielen tritt an einem Teil der ersten Vertiefungen 126 die Oberfläche 118 des Basismaterials 112 zu Tage und die zweiten Erhebungen 128 und die zweiten Vertiefungen 130 sind direkt in die Oberfläche 118 des Basismaterials 112 eingebracht. Dadurch wird hier auf der Oberfläche 118 des derart ausgestalteten Basismaterials 112 eine Topographie erzeugt, welches auch als chemisches Muster 150 bezeichnet werden kann. In dem vorliegenden Beispiel der dünnen magnetischen Nickelschicht als die als gesonderte Schicht 148 auf der nicht-magnetischen Kupferfolie als das unstrukturierte Basismaterial 112 wechseln sich so flächig magnetische Bereiche mit nicht-magnetischen Bereichen auf der Oberfläche 118 des Basismaterials 112 ab. Das dargestellte chemische Muster 150 lässt sich auch auf eine Einbringung unterschiedlicher funktioneller Strukturgruppen auf die verschiedenen Bereiche anwenden, wie z.B. eine Beeinflussung eines Benetzungsverhaltens, etwa durch Einbringung polarer oder unpolarer Gruppen für nicht-wässrige bzw. für wässrige Pastenmassen 144.

Die Figuren 6a und 6b zeigen jeweils REM-Bilder von Schichtverbünden 110, welche auf einer unstrukturierten Standard-Kupferfolie als dem unstrukturierten Basismaterial 112 gemäß dem Stand der Technik (siehe Figur 6a) bzw. auf einer Kupferfolie mit hierarchischer Strukturierung mit Nano-Rippen als dem strukturierten Basismaterial 112 gemäß der vorliegenden Erfindung (siehe Figur 6b) hergestellt wurden. Die Größe der Strukturen ergibt sich auch hier aus der jeweiligen Größenangabe im Balken unten rechts. Während der gemäß dem Stand der Technik hergestellte Schichtverbund eine vergleichsweise unvollständige Schichthaftung aufweist, zeigt ein Einsatz der strukturierten Kupferfolie mit hierarchischer Strukturierung gemäß der vorliegenden Erfindung eine hierzu verbesserte Schichthaftung.

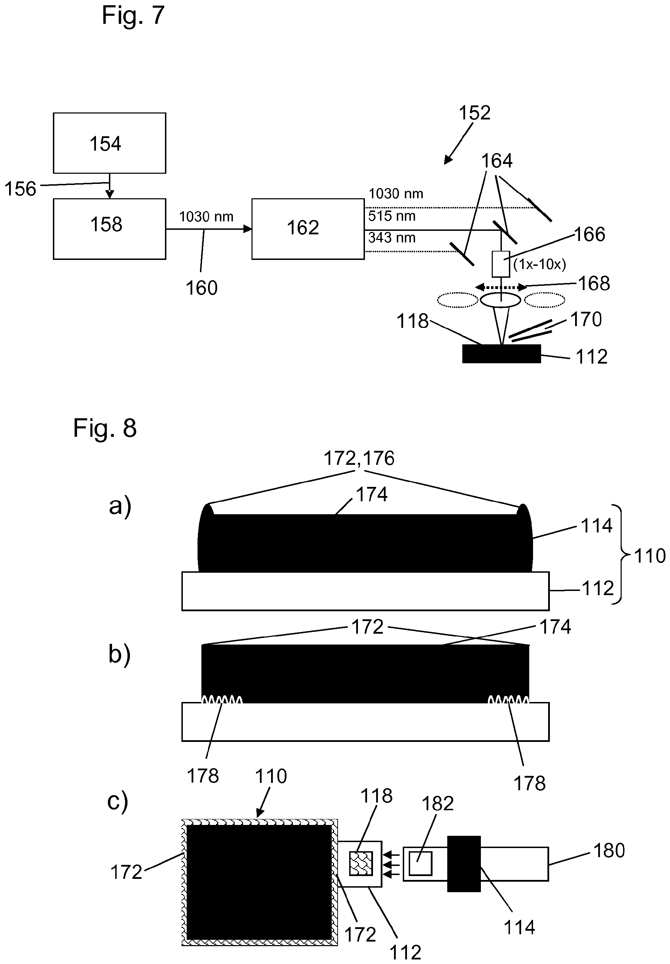

In Figur 7 ist schematisch eine Vorrichtung 152 zur Herstellung eines erfindungsgemäßen elektrisch leitfähigen Basismaterials 112 zur Aufnahme eines Beschichtungsmaterials 114, welches elektrisch leitfähige Partikel 116 aufweist, dargestellt. Ein Oszillator 154 stellt eine Pulsfrequenz 156 von 1 Hz bis 100 MHz bereit, welche einem Femto- oder Picosekunden-Laser 158 bereitgestellt wird, welcher hieraus eine Ultrakurzpuls-Laserstrahlung 160 erzeugt. Die Ultrakurzpuls-Laserstrahlung 160 weist hierbei insbesondere eine Pulslänge von 50 fs bis 100 ps, eine beispielhafte Wellenlänge von 1030 nm, eine Pulsfrequenz von 1 Hz bis 100 MHz, eine Leistung von 1 mW bis 1 kW und einen Fokusdurchmesser von 1 µm bis 1000 µm auf. Die Ultrakurzpuls-Laserstrahlung 160 wird zuvor einem Frequenzvervielfacher 162 zugeführt, welcher hieraus beispielhafte neben der Wellenlänge von 1030 nm die weiteren Wellenlängen von 515 nm (Frequenzverdopplung) und 343 nm (Frequenzverdreifachung) erzeugt. Durch entsprechend angeordnete Spiegel 164 kann die Ultrakurzpuls-Laserstrahlung 160 mit der jeweiligen Wellenlänge auf einen Strahlerweiterer (beam expander) 166 gegeben werden. Mittels einen Scanners 168, insbesondere eines Scanners mit f-theta Linsen, kann dadurch die gewünschte hierarchische Struktur auf einem ausgewählten Bereich auf der Oberfläche 118 des Basismaterials 112 hergestellt werden. Hierbei abgetragenes Material auf der Oberfläche 118 des Basismaterials 112 kann einer Absaugeinrichtung 170 zugeführt werden.

Figur 8b zeigt schematisch einen Querschnitt durch einen Schichtverbund 110, welcher mit einer selektiven und/oder lokalen Strukturierung der Oberfläche 118 des Basismaterials 112 an Schnittkanten oder Beschichtungsrändern 172 ausgestattet ist im Vergleich zu dem in Figur 8a dargestellten herkömmlichen Vorgehen gemäß dem Stand der Technik. Während sich, wie Figur 8a zeigt, auf der Oberfläche 174 des Beschichtungsmaterials 114 nach dem Vorgehen gemäß dem Stand der Technik in der Regel ein Schichtwulst 176 an den Schnittkanten oder den Beschichtungsrändern 172 ausbilden kann, lässt sich mit der erfindungsgemäßen selektiven und/oder lokalen Strukturierung 178 der Oberfläche 118 des Basismaterials 112 an den Schnittkanten oder den Beschichtungsrändern 172 gemäß Figur 8b die Oberfläche 174 des Beschichtungsmaterials 114 auf glatte und homogene Weise erzeugen.

In der Figur 8c ist schematisch eine Draufsicht auf einen vereinzelten Schichtverbund 110, welcher vorzugsweise als Elektrode in einem Akkumulator eingesetzt werden kann, dargestellt. Die Schnittkante 172 ist in diesem bevorzugten Ausführungsbeispiel mit einer oben beschriebenen erfindungsgemäßen hierarchischen Struktur zur Vermeidung der Delamination insbesondere infolge von Stanzen während einer Vereinzelung des Schichtverbunds 110 und/oder zur Vermeidung einer Schichtablösung infolge eines Einsatzes von Ultraschall bei einer weiteren Behandlung des Schichtverbunds 110 versehen. Die strukturierte Oberfläche 118 auf dem als Stromableiterfolie dienenden Basismaterial 112 weist ebenso hierarchische Strukturen auf, um eine optimale Fügung eines separaten Stromableiters 180, insbesondere des hierauf für diesen Zweck vorgesehenen Bereichs 182, und der Stromableiterfolie, insbesondere des Bereichs 118, unter Einsatz von Ultraschall zu ermöglichen. Dies erlaubt durch den im Unterschied zum Stand der Technik verbesserten Kontakt insbesondere die Einleitung eines homogenen elektrischen Stromflusses von außen in die Zelle, insbesondere in den Schichtverbund 110, welcher durch entsprechende hierarchische Strukturierung der Stromableiterfolie optimierte Schichthaftung aufweist.

### Bezugszeichenliste

- 110: Schichtverbund
- 112: Basismaterial
- 114: Beschichtungsmaterial
- 116: elektrisch leitfähige Partikel
- 118: Oberfläche des Basismaterials
- 120: erste Struktur
- 122: zweite Struktur
- 124: erste Erhebungen
- 126: erste Vertiefungen
- 128: zweite Erhebungen
- 130: zweite Vertiefungen
- 132: Oberfläche der ersten Struktur
- 134: Kanal
- 136: Seitenwand des Kanals
- 138: eckiger Querschnitt
- 140: gerundeter Querschnitt
- 142: Hinterschnitt
- 144: Pastenmasse (gießfähiger Schlicker)
- 146: Kapillarkräfte in Bewegungsrichtung
- 148: gesonderte Schicht
- 150: chemisches Muster
- 152: Vorrichtung zur Herstellung des Basismaterials
- 154: Oszillator
- 156: Pulsfrequenz
- 158: Femto- oder Picosekunden-Laser
- 160: Ultrakurzpuls-Laserstrahlung
- 162: Frequenzvervielfacher
- 164: Spiegel
- 166: Strahlerweiterer
- 168: Scanner
- 170: Absaugeinrichtung
- 172: Schnittkante oder Beschichtungsrand
- 174: Oberfläche des Beschichtungsmaterials
- 176: Schichtwulst
- 178: selektive und/oder lokale Strukturierung
- 180: Stromableiter
- 182: Bereich

## Patentansprüche

1. Elektrisch leitfähiges Basismaterial (112), das zur Aufnahme eines Beschichtungsmaterials (114), welches elektrisch leitfähige Partikel (116) aufweist, eingerichtet ist, wobei das Basismaterial (112) eine Metallfolie umfasst, wobei zumindest eine zur Aufnahme der elektrisch leitfähigen Partikel (116) vorgesehene Oberfläche (118) des Basismaterials (112) über eine erste Struktur (120) und über eine zweite Struktur (122) verfügt, wobei die erste Struktur (120) erste Erhebungen (124) und/oder erste Vertiefungen (126) in Bezug auf die Oberfläche (118) des Basismaterials (112) aufweist, wobei die zweite Struktur (122) zweite Erhebungen (128) und/oder zweite Vertiefungen (130) in Bezug auf die Oberfläche (132) der ersten Struktur (120) aufweist, wobei die ersten Erhebungen (124) und/oder die ersten Vertiefungen (126) über erste Abmessungen verfügen, wobei die zweiten Erhebungen (128) und/oder die zweiten Vertiefungen (130) über zweite Abmessungen verfügen, wobei die ersten Abmessungen die zweiten Abmessungen um mindestens einen Faktor 10 übertreffen,
**dadurch gekennzeichnet, dass**
die Oberfläche (118) des unstrukturierte Basismaterials (112) weiterhin über eine gesonderte Schicht (148) eines weiteren elektrisch leitfähigen Materials verfügt, wobei zumindest an einem Teil der ersten Vertiefungen (126) die Oberfläche (118) des Basismaterials (112) zu Tage tritt und die zweiten Erhebungen (128) und/oder die zweiten Vertiefungen (130) in die Oberfläche (118) des Basismaterials (112) eingebracht sind.

2. Basismaterial (112) nach Anspruch 1, wobei die ersten Abmessungen von 1 µm bis 100 µm und wobei die zweiten Abmessungen von 100 nm bis 2000 nm betragen.

3. Basismaterial (112) nach einem der Ansprüche 1 oder 2, wobei die Metallfolie eine Dicke von 5 µm bis 50 µm aufweist.

4. Basismaterial (112) nach Anspruch 3, wobei die Metallfolie eine Dicke von 10 µm bis 20 µm aufweist.

5. Basismaterial (112) nach einem der Ansprüche 1 bis 4, wobei die Metallfolie eine Aluminiumfolie oder eine Kupferfolie umfasst.

6. Elektrisch leitfähiger Schichtverbund (110), umfassend ein elektrisch leitfähiges Basismaterial (112) nach einem der Ansprüche 1 bis 5 und ein elektrisch leitfähige Partikel (116) aufweisendes Beschichtungsmaterial (114), wobei die Partikel (116) an ersten Erhebungen (124) und/oder an ersten Vertiefungen (126) in einer ersten Struktur (120) auf der Oberfläche (118) des Basismaterials (112) und/oder an zweiten Erhebungen (128) und/oder an zweiten Vertiefungen (130) in einer zweiten Struktur (122) auf der Oberfläche (132) der ersten Struktur (120) anhaften.

7. Schichtverbund (110) nach Anspruch 6, wobei die Partikel (116) in eine Phase, welche Polymerbinder und/oder Leitfähigkeitsadditive umfassen kann, eingebracht sind.

8. Verfahren zur Herstellung eines elektrisch leitfähigen Basismaterials (112) zur Aufnahme eines Beschichtungsmaterials (114), welches elektrisch leitfähige Partikel (116) aufweist, umfassend die folgenden Schritte:
a) Bereitstellen eines unstrukturierten elektrisch leitfähigen Basismaterials (112) in Form einer Metallfolie; und
b) Beaufschlagen zumindest einer zur Aufnahme der elektrisch leitfähigen Partikel (116) vorgesehenen Oberfläche (118) des Basismaterials (112) mittels Ultrakurzpuls-Laserstrahlung (160), wodurch eine erste Struktur (120) in Form von ersten Erhebungen (124) und/oder von ersten Vertiefungen (126) in Bezug auf die Oberfläche (118) des Basismaterials (112) und gleichzeitig eine zweite Struktur (122) in Form von zweiten Erhebungen (128) und/oder von zweiten Vertiefungen (130) in Bezug auf die Oberfläche (132) der ersten Struktur (120) derart erzeugt werden, dass die ersten Erhebungen (124) und/oder die ersten Vertiefungen (126) erste Abmessungen und die zweiten Erhebungen (128) und/oder die zweiten Vertiefungen (130) zweite Abmessungen aufweisen, wodurch die ersten Abmessungen um mindestens einen Faktor 10 größer als die zweiten Abmessungen hergestellt werden.

9. Verfahren nach Anspruch 8, wobei die Erzeugung der ersten Struktur (120) und der zweiten Struktur (122) auf der Oberfläche (118) des Basismaterials (112) in einem Verfahrensschritt erfolgt.

10. Verfahren nach Anspruch 8 oder 9, wobei das Beaufschlagen zumindest der zur Aufnahme der elektrisch leitfähigen Partikel (116) vorgesehenen Oberfläche (118) des Basismaterials (112) mittels der Ultrakurzpuls-Laserstrahlung (160) derart erfolgt, dass die ersten Abmessungen auf 1 µm bis 100 µm und die zweiten Abmessungen auf 100 nm bis 2000 nm eingestellt werden.

11. Verfahren nach einem der Ansprüche 8 bis 10, wobei die Ultrakurzpuls-Laserstrahlung (160) mittels eines Femtosekunden-Lasers und/oder eines Picosekunden-Lasers (158) erzeugt wird, wobei die Ultrakurzpuls-Laserstrahlung (160) eine Pulslänge von 50 fs bis 100 ps, eine Wellenlänge von 190 nm bis 3 µm, eine Pulsfrequenz von 1 Hz bis 100 MHz, eine Leistung von 1 mW bis 1 kW und einen Fokusdurchmesser von 1 µm bis 1000 µm aufweist.

12. Verfahren zur Herstellung eines Schichtverbundes (110) nach einem der Ansprüche 6 oder 7, umfassend die folgenden Schritte:
c) Aufbringen einer gießfähigen Pastenmasse (144), in welche zumindest ein Lösungsmittel und die elektrisch leitfähigen Partikel (116) eingebracht sind, auf die zur Aufnahme der elektrisch leitfähigen Partikel (116) vorgesehene Oberfläche (118) eines Basismaterials (112) nach einem der Ansprüche 1 bis 4;
d) Verteilen der Pastenmasse (144) durch Kapillarwirkung auf der Oberfläche (118) des Basismaterials (112); und
e) Trocknen der Pastenmasse (144).

13. Verwendung eines elektrisch leitfähigen Basismaterials (112) nach einem der Ansprüche 1 bis 5 als Stromableiter für ein elektrisch leitfähige Partikel (116) aufweisendes Elektrodenmaterial.

14. Verwendung eines elektrisch leitfähigen Schichtverbunds (110) nach einem der Ansprüche 6 oder 7 in einem Sekundärelement eines Akkumulators, insbesondere in einer Lithium-Ionen-Batterie.

15. Akkumulator, insbesondere eine Lithium-Ionen-Batterie, welcher mindestens einen elektrisch leitfähigen Schichtverbund gemäß einem der Ansprüche 6 oder 7 in mindestens einem Sekundärelement aufweist.

## Claims

1. Electrically conductive base material (112) which is designed for accommodating a coating material (114) which comprises electrically conductive particles (116), wherein the base material (112) comprises a metal foil, wherein at least one surface (118) of the base material (112) provided for accommodating the electrically conductive particles (116) has a first structure (120) and a second structure (122), wherein the first structure (120) has first raised regions (124) and/or first depressions (126) relative to the surface (118) of the base material (112), wherein the second structure (122) has second raised regions (128) and/or second depressions (130) relative to the surface (132) of the first structure (120), wherein the first raised regions (124) and/or the first depressions (126) have first dimensions, and wherein the second raised regions (128) and/or the second depressions (130) have second dimensions, with the first dimensions exceeding the second dimensions by a factor of at least 10,
**characterized in that**
the surface (118) of the unstructured base material (112) additionally has a separate layer (148) of a further electrically conductive material, wherein the surface (118) of the base material (112) is exposed at at least part of the first depressions (126) and the second raised regions (128) and/or the second depressions (130) have been introduced into the surface (118) of the base material (112).

2. Base material (112) according to claim 1, wherein the first dimensions are of 1 µm to 100 µm and the second dimensions are of 100 nm to 2000 nm.

3. Base material (112) according to claim 1 or 2, wherein the metal foil has a thickness of 5 µm to 50 µm.

4. Base material (112) according to claim 3, wherein the metal foil has a thickness of 10 µm to 20 µm.

5. Base material (112) according to any of claims 1 to 4, wherein the metal foil comprises an aluminum foil or a copper foil.

6. Electrically conductive layer composite (110) comprising an electrically conductive base material (112) according to any of claims 1 to 5 and a coating material (114) comprising electrically conductive particles (116), wherein the particles (116) adhere to first raised regions (124) and/or to first depressions (126) in a first structure (120) on the surface (118) of the base material (112) and/or to second raised regions (128) and/or to second depressions (130) in a second structure (122) on the surface (132) of the first structure (120).

7. Layer composite (110) according to claim 6, wherein the particles (116) have been introduced into a phase which can comprise polymeric binders and/or conductivity additives.

8. Method for producing an electrically conductive base material (112) for accommodating a coating material (114) comprising electrically conductive particles (116), which comprises the following steps:
a) provision of an unstructured electrically conductive base material (112) in the form of a metal foil; and
b) treatment of at least one surface (118) of the base material (112) provided for accommodating the electrically conductive particles (116) by means of ultrashort pulse laser radiation (160), as a result of which a first structure (120) in the form of first raised regions (124) and/or of first depressions (126) relative to the surface (118) of the base material (112) and at the same time a second structure (122) in the form of second raised regions (128) and/or of second depressions (130) relative to the surface (132) of the first structure (120) are produced in such a way that the first raised regions (124) and/or the first depressions (126) have first dimensions and the second raised regions (128) and/or the second depressions (130) have second dimensions, as a result of which the first dimensions are made larger than the second dimensions by a factor of at least 10.

9. Method according to claim 8, wherein the first structure (120) and the second structure (122) are produced on the surface (118) of the base material (112) in one process step.

10. Method according to claim 8 or 9, wherein the treatment of at least the surface (118) of the base material (112) provided for accommodating the electrically conductive particles (116) by means of the ultrashort pulse laser radiation (160) is carried out in such a way that the first dimensions are set to 1 µm to 100 µm and the second dimensions are set to 100 nm to 2000 nm.

11. Method according to any of claims 8 to 10, wherein the ultrashort pulse laser radiation (160) is generated by means of a femtosecond laser and/or a picosecond laser (158), wherein the ultrashort pulse laser radiation (160) has a pulse length of 50 fs to 100 ps, a wavelength of 190 nm to 3 µm, a pulse frequency of 1 Hz to 100 MHz, a power of 1 mW to 1 kW and a focus diameter of 1 µm to 1000 µm.

12. Method for producing a layer composite (110) according to claim 6 or 7, which comprises the following steps:
c) application of a pourable paste-like composition (144) into which at least one solvent and the electrically conductive particles (116) have been introduced to the surface (118) of a base material (112) according to any of claims 1 to 4 provided for accommodating the electrically conductive particles (116);
d) distribution of the paste-like composition (144) by capillary action over the surface (118) of the base material (112); and
e) drying of the paste-like composition (144).

13. Use of an electrically conductive base material (112) according to any of claims 1 to 5 as power outlet lead for an electrode material comprising electrically conductive particles (116).

14. Use of an electrically conductive layer composite (110) according to claim 6 or 7 in a secondary element of a rechargeable battery, in particular in a lithium ion battery.

15. Rechargeable battery, in particular a lithium ion battery, which has at least one electrically conductive layer composite according to claim 6 or 7 in at least one secondary element.

## Revendications

1. Matériau de base électriquement conducteur (112), qui est conçu pour recevoir un matériau de revêtement (114), qui présente des particules électriquement conductrices (116), dans lequel le matériau de base (112) comprend une feuille de métal, dans lequel au moins une surface (118) du matériau de base (112) prévue pour recevoir les particules électriquement conductrices (116) comporte une première structure (120) et une seconde structure (122), dans lequel la première structure (120) présente des premières protubérances (124) et/ou des premiers creux (126) par rapport à la surface (118) du matériau de base (112), dans lequel la seconde structure (122) présente des secondes protubérances (128) et/ou des seconds creux (130) par rapport à la surface (132) de la première structure (120), dans lequel les premières protubérances (124) et/ou les premiers creux (126) présentent des premières dimensions, dans lequel les secondes protubérances (128) et/ou les seconds creux (130) présentent des secondes dimensions, dans lequel les premières dimensions dépassent les secondes dimensions d'au moins un facteur 10,
**caractérisé en ce que**
la surface (118) du matériau de base non structuré (112) comporte en outre une couche séparée (148) d'un autre matériau électriquement conducteur, dans lequel la surface (118) du matériau de base (112) est apparente au moins sur une partie des premiers creux (126) et les secondes protubérances (128) et/ou les seconds creux (130) sont pratiqués dans la surface (118) du matériau de base (112).

2. Matériau de base (112) selon la revendication 1, dans lequel les premières dimensions valent de 1 µm à 100 µm et dans lequel les secondes dimensions valent de 100 nm à 2000 nm.

3. Matériau de base (112) selon une des revendications 1 ou 2, dans lequel la feuille de métal présente une épaisseur de 5 µm à 50 µm.

4. Matériau de base (112) selon la revendication 3, dans lequel la feuille de base présente une épaisseur de 10 µm à 20 µm.

5. Matériau de base (112) selon l'une quelconque des revendications 1 à 4, dans lequel la feuille de métal comprend une feuille d'aluminium ou une feuille de cuivre.

6. Composite stratifié électriquement conducteur (110), comprenant un matériau de base électriquement conducteur (112) selon l'une quelconque des revendications 1 à 5 et un matériau de revêtement (114) présentant des particules électriquement conductrices (116), dans lequel les particules (116) adhèrent à des premières protubérances (124) et/ou à des premiers creux (126) dans une première structure (120) sur la surface (118) du matériau de base (112) et/ou à des secondes protubérances (128) et/ou à des seconds creux (130) dans une seconde structure (122) sur la surface (132) de la première structure (120).

7. Composite stratifié (110) selon la revendication 6, dans lequel les particules (116) sont introduites dans une phase, qui peut comprendre des liants polymères et/ou des additifs de conductibilité.

8. Procédé de fabrication d'un matériau de base électriquement conducteur (112) destiné à recevoir un matériau de revêtement (114), qui présente des particules électriquement conductrices (116), comprenant les étapes suivantes:
a) préparer un matériau de base électriquement conducteur non structuré (112) sous la forme d'une feuille de métal; et
b) exposer au moins une surface (118) du matériau de base (112) prévue pour recevoir les particules électriquement conductrices (116) à un rayonnement laser à impulsions ultracourtes (160), au moyen duquel on produit une première structure (120) sous la forme de premières protubérances (124) et/ou de premiers creux (126) par rapport à la surface (118) du matériau de base (112) et simultanément une seconde structure (122) sous la forme de secondes protubérances (128) et/ou de seconds creux (130) par rapport à la surface (132) de la première structure (120), de telle manière que les premières protubérances (124) et/ou les premiers creux (126) présentent des premières dimensions et que les secondes protubérances (128) et/ou les seconds creux (130) présentent des secondes dimensions, et on réalise ainsi les premières dimensions plus grandes que les secondes dimensions au moins d'un facteur 10.

9. Procédé selon la revendication 8, dans lequel la production de la première structure (120) et de la seconde structure (122) sur la surface (118) du matériau de base (112) est effectuée en une étape de procédé.

10. Procédé selon une revendication 8 ou 9, dans lequel l'exposition au moins de la surface (118) du matériau de base (112) prévue pour recevoir les particules électriquement conductrices (116) au rayonnement laser à impulsions ultracourtes (160) est effectuée de telle manière que les premières dimensions soient réglées de 1 µm à 100 µm et que les secondes dimensions soient réglées de 100 nm à 2000 nm.

11. Procédé selon l'une quelconque des revendications 8 à 10, dans lequel on produit le rayonnement laser à impulsions ultracourtes (160) au moyen d'un laser femtoseconde et/ou d'un laser picoseconde (158), dans lequel le rayonnement laser à impulsions ultracourtes (160) présente une longueur d'impulsion de 50 fs à 100 ps, une longueur d'onde de 190 nm à 3 µm, une fréquence d'impulsions de 1 Hz à 100 MHz, une puissance de 1 mW à 1 kW et un diamètre de foyer de 1 µm à 1000 µm.

12. Procédé de fabrication d'un composite stratifié (110) selon une des revendications 6 ou 7, comprenant les étapes suivantes:
c) appliquer une masse pâteuse à couler (144), dans laquelle se trouvent au moins un solvant et les particules électriquement conductrices (116), sur la surface (118) d'un matériau de base (112) selon l'une quelconque des revendications 1 à 4 prévue pour recevoir les particules électriquement conductrices (116) ;
d) répartir la masse pâteuse (144) par effet de capillarité sur la surface (118) du matériau de base (112); et
e) sécher la masse pâteuse (144).

13. Utilisation d'un matériau de base électriquement conducteur (112) selon l'une quelconque des revendications 1 à 5 comme dérivateur de courant pour un matériau d'électrode présentant des particules électriquement conductrices (116).

14. Utilisation d'un composite stratifié électriquement conducteur (110) selon une des revendications 6 ou 7 dans un élément secondaire d'un accumulateur, en particulier dans une batterie lithium-ions.

15. Accumulateur, en particulier batterie lithium-ions, qui présente au moins un composite stratifié électriquement conducteur selon une des revendications 6 ou 7 dans au moins un élément secondaire.
